# EUROPEAN PATENT SPECIFICATION

(11) **EP 1 659 675 B1**
(45) Date of publication and mention of the grant of the patent: **22.08.2007**
(21) Application number: 04027469.8
(22) Date of filing: 18.11.2004
(51) Int. Cl.: H02K 23/66, H02K 11/00

(54) **Engine cooling fan motor having thermic cut-out**
Kühllüfter eines Verbrennungsmotors mit einem Thermoschalter
Ventilateur de refroidissement pour moteur à combustion avec interrupteur thermique

(43) Date of publication of application: 24.05.2006
(73) Proprietor: Mako Elektrik Sanayi ve Ticaret A.S., 16159 Osmangazi / Bursa (TR)
(72) Inventor: Kamas, Irfan, 16159 OSMANGAZI / BURSA (TR); Elveren, Murat, 16159 OSMANGAZI / BURSA (TR); Kubilay, Murat, 16159 OSMANGAZI / BURSA (TR); Ediz, Baris, 16159 OSMANGAZI / BURSA (TR)
(74) Representative: Iskender, Ibrahim

(56) References cited:
- EP-A- 0 831 012
- DE-A1- 2 853 905
- US-A- 4 357 565
- PATENT ABSTRACTS OF JAPAN vol. 2002, no. 02, 2 April 2002 (2002-04-02) -& JP 2001 295787 A (TOSHIBA TEC CORP), 26 October 2001 (2001-10-26)
- PATENT ABSTRACTS OF JAPAN vol. 2002, no. 07, 3 July 2002 (2002-07-03) -& JP 2002 084716 A (TOSHIBA TEC CORP), 22 March 2002 (2002-03-22)
- PATENT ABSTRACTS OF JAPAN vol. 2002, no. 11, 6 November 2002 (2002-11-06) & JP 2002 199661 A (TOSHIBA TEC GROUP), 12 July 2002 (2002-07-12)

## Description

### TECHNICAL FIELD

This invention relates to an engine cooling fan motor comprising a thermic cut-out for cooling the radiator of an internal combustion engine. The invention more particularly relates to an engine cooling fan motor having a thermic cut-out securing the motor against temperature increase, so providing safety in sustaining the motor operation without overheating thereof even preventing inflammation.

### BACKGROUND ART

The present invention concerns an engine cooling fan motor for cooling the radiator element of a vehicle of the kind having a motor housing comprising a brush holder having brushes; an armature having a shaft; a commutator attached to the shaft; and magnets placed in the motor housing. Such an engine cooling fan motor, known from background art, is utilized to cool the radiator within which the circulating cooling liquid eventually cools the engine.

Cooling liquid is needed to cool the body temperature of the vehicle engine. In the absence of an efficient cooling, mechanical components of the engine can be permanently damaged. However, the efficient cooling is not solely associated with providing cooling liquid to the engine. Indeed, the cooling liquid also has to be cooled continuously through a radiator onto which a rotating fan blows.

Being a part of these interlinked cooling steps, engine cooling fan motor is crucial for cooling the liquid. Under operational conditions, the fan motor can be exerted severe conditions including complete blockage, semi blockage and freezing. In the relevant technical field, these conditions are simulated through a couple of tests prior to having engineering approval for devising the arrangement on to vehicle.

For instance, complete blockage is tested by means of a rigid part placed between the blades of the fan during operation. Semi blockage is tested by friction increase in the motor components, and motor behavior for freezing is tested in real running conditions. These conditions lead to electric current increase in the motor as resistive forces are exerted thereon. With the increased current magnitude, vehicle fuse blows, at a predetermined level, for preventing the temperature increase in the motor. In case the fan motor electric current magnitude does not reach the reset value of the vehicle fuse, it will not blow to break the current, and thus, will lead to temperature increase in both engine cooling fan motor and the devices which are in relation with it. Temperature increase will inherently lead to component damage like melting and even burning.

There are some attempts to solve this problem in prior art. For example EP0831012 discloses a motor used in a vehicle power steering mechanism with a thermic cut-out switch adapted for switching off or on the electric current fed to the motor in response to predetermined temperature levels. But this document is not diclosing any housing covering a thermic cut-out means, integrated to the brush holder.

In another example; the patent of JP2002084716 discloses a commutator motor comprising a temperature sensor mounted in a housing integrated to the brush holder. The technical features mentioned above two patent applications could not solve the objective technical problem exactly because they are not determining and emphesizing the position of a thermic cut-out means or a temperature sensor.

The document JP2002199661 discloses an electric blower comprising a thermic cut-out switch disposed within a housing.

### BRIEF DISCLOSURE OF THE INVENTION

The invention seeks to provide an engine cooling fan motor efficiently secured thereof by a simple arrangement against damages originated by temperature increase due to electric current increase.

In accordance with the invention, this object is accomplished in an engine cooling fan motor assembly of the above kind by means of a thermic cut-out means, which is mounted on it, by switching on/off the electric current fed to the motor with in response to the predetermined temperature level.

The thermic cut-out means, in accordance with the invention, is assembled into a housing integrated to the brush holder, and the housing is being extended out of the motor housing surface. Therefore, the thermic cut-out is excited by the motor housing temperature and the base plate temperature of the brush holder.

### DESCRIPTION OF THE FIGURES

Further objects and advantages of the present invention will become apparent upon reading the following description taken in conjunction with the appended drawings wherein:
Figure 1 illustrates the engine cooling fan motor assembly in exploded perspective view according to the present invention.

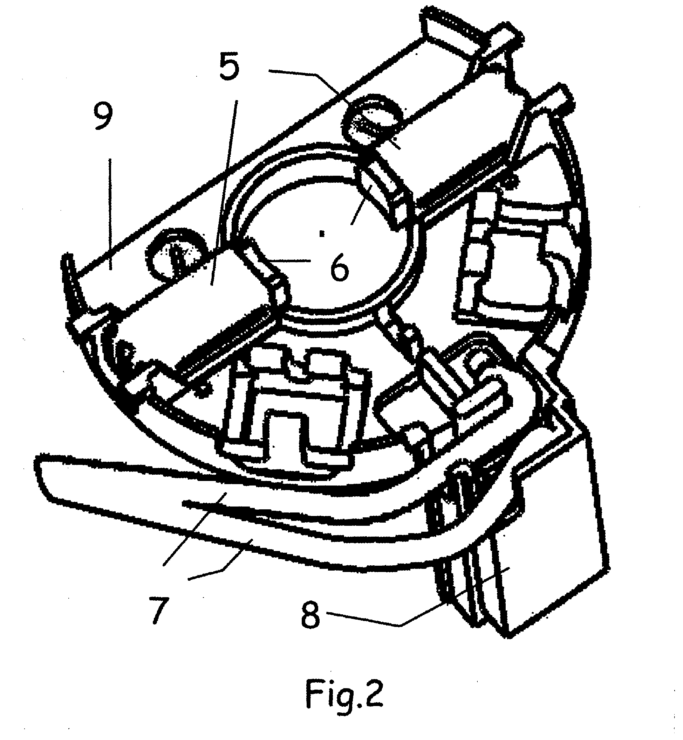

Figure 2 illustrates the brush holder integrated with the thermic cut-out housing in perspective view according to the present invention.

### REFERENCE NUMBERS OF THE PARTS

- 1: Brush holder
- 2: Armature
- 3: Magnet
- 4: Motor housing
- 5: Brush housing
- 6: Brush
- 7: Cables
- 8: Thermic cut-out housing
- 9: Base plate
- 10: Coil
- 11: Shaft
- 12: Commutator

### DISCLOSURE OF THE INVENTION

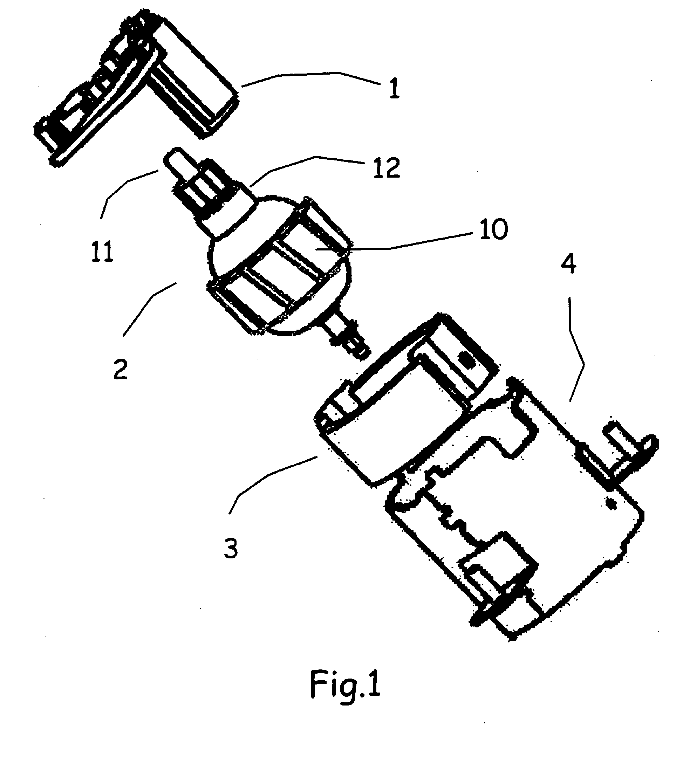

In Figure 1, the engine cooling fan motor assembly in exploded perspective view is shown. According to the figure, the motor comprises;

A motor housing (4) for protecting inner components.

Magnets (3) placed in the motor housing (4) for rendering magnetic field.

An armature (2) having coils (10) thereon and having a shaft (11) extending through the longitudinal axis of the armature (2). A commutator (12), mounted at one end of the armature (2) being in contact with the brushes (6) disposed in brush housings (5) of a brush holder (1).

Brush holder (1) further comprises a base plate (9), made of a plastic-based material formed by plastic injection moulding, and brush housings (5) manually mounted on it.

A thermic cut-out housing (8) being integrated with the brush holder base plate (9) as an extension part of it.

A thermic cut-out means responsive to temperature is placed in the thermic cut-out housing (8). Since, the thermic cut-out means is a temperature-sensitive device, the position thereof is essential for efficiently operating the engine cooling fan motor i.e. breaking the current in optimum condition, that is the thermic cut-out switches off the current when its temperature reachs the upper specified value; and switch on the current when its temperature decreases to the lower specified value.

The thermic cut-out is disposed in the housing (8) being in contact with the motor housing (4). Therefore, the driving temperature for activating the thermic cut-out to switch on or off is provided by both temperature of the motor housing (4) and temperature of the brush holder base plate (9) which is integrated with the thermic cut-out housing (8).

Switching on or off of the thermic cut-out according to the transferred heat from the base plate (9) and the motor housing (4) is achieved through the above-mentioned mechanism. However, the thermic cut-out means could be placed in alternative locations (more than one) in the engine cooling fan motor assembly to break the current at the predetermined temperature values, but plural usage depends on system design.

Once the temperature decreases to a predetermined level, thermic cut-out switches on the current flow so that the current is fed to the engine cooling fan motor to operate thereof.

Cables (7) are representing the current flow lines between the thermic cut-out and a power supplier driven the engine cooling fan motor.

## Claims

1. An engine cooling fan motor for cooling radiator element of a vehicle comprising a motor housing (4) having a brush holder (1) including brushes (6); an armature (2) having a shaft (11); a commutator (12) attached to the shaft (11); and magnets (3) placed in the motor housing (4) wherein at least one thermic cut-out means is adapted for switching off or on the electric current fed to the motor in response to predetermined temperature levels, wherein said thermic cut-out means is disposed in a thermic cut-out housing (8) integrated to said brush holder (1), **characterized in that** said thermic cut-out housing (8) is in contact with said motor housing (4) in such a way that the thermic cut-out means is activated by the cover motor housing (4) temperature and the brush holder (1) temperature.

## Patentansprüche

1. Motorlüftermotor zum Kühlen eines Kühlerelements eines Fahrzeugs, umfassend ein Motorgehäuse (4) mit einem Bürstenhalter (1), der Bürsten (6) enthält; eine Armatur (2) mit einer Welle (11) ; einen Umschalter (12), der an der Welle (11) angebracht ist; und Magneten (3), die in dem Motorgehäuse (4) angeordnet sind, wobei zumindest ein thermisches Ausschaltmittel zum Ein- oder Ausschalten des elektrischen Stroms, der dem Motor zugeführt ist, in Reaktion auf vorgegebene Temperaturpegel geeignet ist, wobei das thermische Ausschaltmittel in einem thermischen Ausschaltgehäuse (8) angeordnet ist, welches in den Bürstenhalter (1) integriert ist, **dadurch gekennzeichnet, dass** das thermische Ausschaltgehäuse (8) derart mit dem Motorgehäuse (4) in Kontakt ist, dass das thermische Ausschaltmittel durch die Temperatur des Motorgehäuses (4) und die Temperatur des Bürstenhalters (1) aktiviert ist.

## Revendications

1. Moteur de ventilateur de refroidissement de moteur pour le refroidissement d'un élément de radiateur d'un véhicule, comprenant un carter de moteur (4) équipé d'un porte-balais (1) comprenant des balais (6), un induit (2) comportant un arbre (11), un commutateur (4) rattaché à l'arbre (11) et des aimants (3) placés dans le carter de moteur (4), dans lequel au moins un moyen de disjonction thermique est apte à désactiver ou activer le courant électrique fourni au moteur en réponse à des niveaux de température prédéterminés, ledit moyen de disjonction thermique étant disposé dans un boîtier de disjonction thermique (8) intégré dans ledit porte-balais (1), **caractérisé en ce que** le boîtier de disjonction thermique (8) est en contact avec ledit carter de moteur (4) de manière à ce que le moyen de disjonction thermique soit activé par la température du carter de couverture de moteur (4) et la température du porte-balais (1).
